(19) **Europäisches Patentamt
European Patent Office
Office européen des brevets**

(11) **EP 3 128 386 B1**

(12) **EUROPEAN PATENT SPECIFICATION**

(45) Date of publication and mention
of the grant of the patent:
**06.12.2017 Bulletin 2017/49**

(51) Int Cl.:
***G05D 1/00*** *(2006.01)*      ***G05D 1/10*** *(2006.01)*
***G05D 1/12*** *(2006.01)*

(21) Application number: **15382414.9**

(22) Date of filing: **04.08.2015**

(54) **METHOD AND DEVICE FOR TRACKING A MOVING TARGET FROM AN AIR VEHICLE**

VERFAHREN UND VORRICHTUNG ZUM VERFOLGEN EINES SICH BEWEGENDEN ZIELS MIT EINEM LUFTFAHRZEUG

PROCÉDÉ ET DISPOSITIF DE POURSUITE D'UNE CIBLE MOBILE AVEC UN VÉHICULE AÉRIEN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.02.2017 Bulletin 2017/06**

(73) Proprietor: **The Boeing Company
Chicago, IL 60606-1596 (US)**

(72) Inventors:
 • **QUEREJETA MASAVEU, Carlos
   28042 Madrid (ES)**
 • **NAVARRO FELIX, Francisco A.
   28042 Madrid (ES)**
 • **VALLS HERNANDEZ, Ernesto
   28042 Madrid (ES)**
 • **HAYES, Andrew
   28042 Madrid (ES)**

(74) Representative: **Carvajal y Urquijo, Isabel et al
Clarke, Modet & Co.
Suero de Quiñones, 34-36
28002 Madrid (ES)**

(56) References cited:
**EP-A2- 2 071 353**     **EP-A2- 2 083 341**
**US-A1- 2007 250 260**     **US-A1- 2010 042 269**

**Description**

<u>TECHNICAL FIELD</u>

The present disclosure relates to methods of tracking a moving target from an air vehicle, the methods comprising taking into consideration an area of likely detectability of the air vehicle by the moving target, in such a way that the air vehicle performs its tracking mission while avoiding being detected by the moving target. A system and a method for autonomously tracking a moving target is disclosed in EP 2 071 353 A2. The methods of the present disclosure are applicable in the field of civil and military operations involving surveillance and tracking of moving targets using air vehicles. The methods are applicable in the field of Aeronautic Engineering and, more particularly, in the field of Electronics and Automatic Regulation for Avionics.

<u>BACKGROUND</u>

One of the most frequent tasks allocated to unmanned aerial vehicles (UAV's) is that related to Intelligence, Surveillance and Reconnaissance (ISR) missions. This tasks usually involve following and/or tracking a moving target (which may either be ground-based, air-based or sea-based) from the air vehicle for purposes such as border security, perimeter protection, wildlife monitoring, law enforcement, military operations or general purpose surveillance.
The main challenges that have to be addressed in ISR missions are: the estimation of the moving target motion (position, velocity and acceleration) and the actual guidance of the air vehicle. While the former challenge is object of extensive work and literature, the latter is still under study and remains with no clear solution in order to provide for a fully autonomous method for guiding an UAV.
Provided that a reliable estimation of the moving target motion is available, the main issues that should be addressed when tackling the problem of tracking a moving target from an air vehicle are: minimum detectability by the moving target; avoiding sensor blind spots that could lead the air vehicle to lose visual contact with the moving target to be tracked; managing variable weather conditions; considering both moving target dynamics and air vehicle motion characteristics, and; considering terrain characteristics (obstacles, terrain elevation, etc.).

<u>SUMMARY</u>

In order to solve the inconveniences and address the issues mentioned above, a method of tracking a moving target from an air vehicle is presented herewith.
The method of tracking a moving target from an air vehicle includes determining an estimated location and speed of at least one moving target and instructing an air vehicle to follow the moving target.
The method of tracking a moving target from an air vehicle includes:

 o determining a detectability zone surrounding the moving target;

 o calculating at least one reference location for the air vehicle, wherein the reference location is a location relative to the estimated location and/or speed of the moving target, wherein the reference location is placed out of the detectability zone;

 o generating at least one guidance reference to command the air vehicle for tracking the moving target, wherein the guidance reference comprises at least:

  ▪ a desired course to fly towards the calculated reference location;

  ▪ a desired speed to fly towards the calculated reference location;

  ▪ a desired flying altitude, and;

  ∘ instructing the air vehicle to fly according to the generated guidance reference.

The determination of the detectability zone, the calculation of a reference location and the generation of at least one guidance reference are performed according to at least one predetermined behavior policy of the air vehicle.
According to a possible embodiment of the method, the desired speed is calculated based on the divergence existing among actual/current location of the air vehicle and the calculated reference location of the air vehicle.
The mentioned divergence existing among the actual location of the air vehicle and the reference location of the air vehicle may be calculated based on any combination of one or more of at least:

  ∘ angular deviation existing between:

    ▪ a first ground imaginary line which is a projection on a horizontal plane of a first imaginary line which links the moving target with the air vehicle; and

    ▪ a second ground imaginary line which is a projection on the horizontal plane of a second imaginary line which links the moving target with the at least one reference location of the air vehicle, and;

  ∘ radial deviation existing between:

    ▪ a circumference centered in the moving target and passing along a projection in the horizontal plane of the actual location of the air vehicle; and

    ▪ a circumference centered in the moving target and passing along a projection in the horizontal plane of the reference location of the air vehicle.

The desired speed at which the air vehicle flies towards the reference location may be calculated according to any combination of one or more of at least proportional, integral and derivative criteria, which mathematically combine any combination of one or more of at least the angular deviation and the radial deviation.

According to a possible embodiment of the method, the desired speed to fly towards the reference location is calculated based on wind velocity local to the actual location of the air vehicle.

A predetermined behavior policy, may indicate that the detectability zone is a circle in a horizontal plane, centered in the moving target.

Also according to a predetermined behavior policy, the detectability zone may be based on any combination of one or more of at least:

  ∘ likeliness that the moving target detects sound emitted by the air vehicle, wherein this likeliness is based on features of the air vehicle, and;

  ∘ likeliness that the moving target visually detects the air vehicle, wherein this likeliness is based on features of the air vehicle.

According to a possible embodiment of the method, a predetermined behavior policy for calculating the reference location is based on placing the reference location among a first boundary, which is a limit for the detectability zone, and a second boundary, which is a limit beyond which the air vehicle is not likely to detect the moving target, wherein this likeliness is based on features of the air vehicle.

According to a predetermined behavior policy, the first boundary and the second boundary have the shapes of circles in a horizontal plane, the circles centered in the moving target.

Also according to a predetermined behavior policy, the reference location of the air vehicle is placed at an altitude which is adjusted depending on terrain characteristics, so that if there comes up an obstacle which hinders detection of the mobile target from the air vehicle, the altitude of the reference location is accordingly raised or lowered.

The method includes, according to a possible embodiment thereof, assessing whether the estimated speed of the moving target:

  ∘ is higher than maximum groundspeed (speed with respect to the ground) allowed for the air vehicle, under actual wind conditions (under the wind conditions at the time and location where the air vehicle is currently flying);

  ∘ is lower than minimum groundspeed allowed for the air vehicle, under actual wind conditions; or

  ∘ falls between the minimum groundspeed allowed for the air vehicle and the maximum groundspeed allowed for the air vehicle (or is equal to one of these limits), under actual wind conditions.

According to a possible embodiment of the method, if the speed of the moving target is lower than the minimum groundspeed of the air vehicle, the method includes:

  ∘ generating at least: a first guidance reference and a second guidance reference, wherein the first guidance reference includes at least one first reference location for the air vehicle and the second guidance reference includes at least one second reference location for the air vehicle, wherein the first reference location and the second reference location are placed out of the detectability zone, and;

◦ instructing the air vehicle to alternately fly towards the first reference location and towards the second reference location, according to the generated first guidance reference and second guidance reference.

According to a possible embodiment of the method, if the speed of the moving target is higher than the maximum groundspeed of the air vehicle, the method includes generating at least one guidance reference comprising at least one reference location for the air vehicle, wherein the reference location is placed out of the detectability zone and wherein the method includes instructing the air vehicle to fly towards the reference location at the maximum groundspeed allowed for the air vehicle, under actual wind conditions.

Lastly, according to a possible embodiment of the method, if the speed of the moving target is equal or falls between the minimum groundspeed allowed for the air vehicle and the maximum groundspeed allowed for the air vehicle, under actual wind conditions, the method includes generating at least one guidance reference comprising at least one reference location for the air vehicle, wherein the reference location for the air vehicle is placed out of the detectability zone and right behind the moving target.

The present disclosure also refers to a computer readable medium including instructions for carrying out the method described above.

Finally, the present disclosure also refers to a system for tracking a moving target) from an air vehicle, wherein the system includes a Tracking Infrastructure Module which in turn comprises an Air Vehicle Behavior Policies Module and Tracking Algorithm Module. The Tracking Algorithm Module is configured to perform the method described above, according to behavior policies stored in the Air Vehicle Behavior Policies Module.

## BRIEF DESCRIPTION OF THE FIGURES

Figure 1: shows a schematic diagram of different architecture modules for possible software/hardware implementation of a preferred embodiment of the method.

Figure 2: shows a schematic view of an air vehicle tracking a moving target from behind, in which the detectability area of the air vehicle has been represented.

Figure 3: shows a flowchart depicting the steps comprised within a preferred embodiment of a tracking algorithm which performs the method of tracking a moving target.

Figure 4: shows a schematic diagram representing the positions of the air vehicle and the moving target, at step 2 of the flowchart shown in Figure 3.

Figure 5: shows a schematic diagram representing the positions, course and cinematic vectors concerning steps 3 to 5 of the flowchart shown in Figure 3.

Figure 6: shows a schematic diagram representing the positions and cinematic vectors concerning steps 6 and 7 of the flowchart shown in Figure 3.

## DETAILED DESCRIPTION

The following is a description of exemplary embodiments of the method of tracking a moving target 11 (for instance a Ground Moving Target -GMT-) from an air vehicle 10 (for instance an UAV).

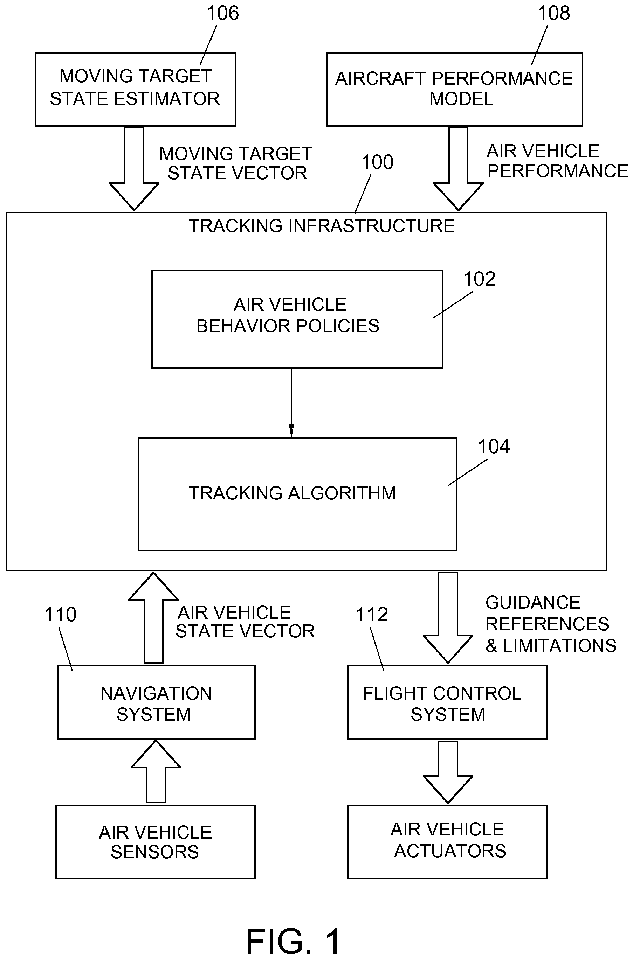

Figure 1 shows a schematic diagram in which different boxes represent architecture modules of a software/hardware implementation of the method described in the present disclosure.

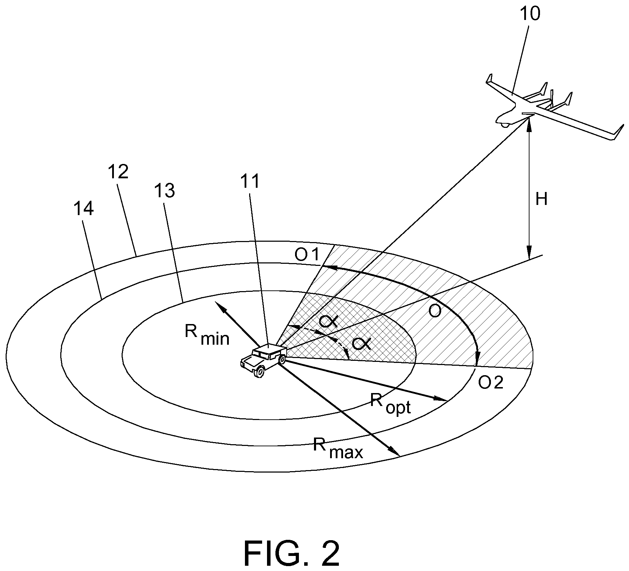

According to Figure 1, a main box represents an architecture module, namely the Tracking Infrastructure Module 100 for tracking of the moving target 11. The Tracking Infrastructure Module 100, which is a core component implementing the method object of the present disclosure, in turn comprises two modules, i.e. an Air Vehicle Behavior Policies Module 102 and a Tracking Algorithm Module 104, which in Figure 2 are represented by two boxes inside the main box. The Tracking Algorithm Module 104 holds the tracking/guidance algorithm that is used to generate guidance references towards which the air vehicle 10 is commanded to fly in order to track the moving target 11; the Air Vehicle Behavior Policies Module 102 comprises the behavioral policies of the air vehicle 10. These policies, which take into account, among others, both the Aircraft Performance Model (APM) of the air vehicle in which the present method is implemented and a digital map of the terrain over which the air vehicle flies, are fed into the Tracking Algorithm Module 104.

The tracking algorithm is responsible to state the generic problem of solving the desired relative motion of the air vehicle with respect to the moving target, and provide the appropriate guidance references to the Flight Control system (FC) to actually exhibit such relative motion. The generic problem is stated in terms of several parameters (detectability of the air vehicle, maximum and optimal distances of the air vehicle with respect to the moving target, desired altitude, desired relative location (alpha angle, as will be described below), ...) and also takes into account limitations stated on the air vehicle performance (like maximum and minimum airspeeds, and roll, pitch and yaw angles). The air vehicle behavior policies accommodate user preferences that actually impose conditions or define parameters on which the tracking algorithm is based (the aforementioned detectability distance, desired altitude, etc.).

The Tracking Infrastructure Module 100 comprises three inputs and one output. Each of the inputs is respectively connected to a Moving Target State Estimator Module 106, to an Aircraft Performance Model Module 108 and to a Navigation System Module 110. The output of the Tracking Infrastructure Module 100 is connected to a Flight Control System (FC) Module 112. The modules connected to the Tracking Infrastructure Module 100 are not itself part of the method of the present disclosure (it is not the purpose of the present disclosure to describe in detail said components), although the method of the present disclosure takes benefit of these architecture modules represented by these outer modules.

The Moving Target State Estimator Module 106 represents an architecture module comprising all the necessary components (sensors and other hardware/software, either onboard or not) for reliably estimating the current (updated) state of the moving target 11. The input that the Moving Target State Estimator Module 106 gives to the Tracking Infrastructure Module 100 is preferably in the form of a moving target state vector. For the purposes of the present method, it is considered that the estimation of the moving target 11 motion is given and is reliable. Thus, the details of this estimation of the moving target 11 motion do not form part of the present method. The moving target state vector usually includes information on position, speed and attitudes (and sometimes their derivatives) of the moving target 11.

The Aircraft Performance Model Module 108 represents an architecture module comprising the air vehicle 10 performance model. Thus, the air vehicle 10 performance characteristics are given as an input from the Aircraft Performance Model Module 108 to the Tracking Infrastructure Module 100. The air vehicle performance is used by the tracking algorithm to ensure that the generated guidance references fall within the operational limits and flight envelope of the air vehicle (i.e. the air vehicle is capable of flying in accordance with the generated guidance references).

The Navigation System Module 110 gives an input to the Tracking Infrastructure Module 100 of the Air Vehicle State Vector. The Navigation System Module 110 is connected to air vehicle 10 sensors. The Air Vehicle State Vector given as an input from the Navigation System Module 110 to the Tracking Infrastructure Module 100 comprises an air vehicle 10 position, speed and attitude (and their derivatives).

The Flight Control System Module 112 receives as an input the Guidance References (which in turn take into account the flight limitations given by the behavior policies and Aircraft Performance Model -APM-) which the Tracking Infrastructure Module 100 delivers as an output. Thus, the Flight Control System (FC) is in charge of actually making the air vehicle 10 fly towards the references generated by the tracking algorithm. The FC is the ultimate responsible for issuing signals to the air vehicle's actuators which drive the air vehicle's flight behavior. The FC uses the guidance references to generate such signals.

According to a preferred embodiment of the method, guidance references for guiding an air vehicle 10 are generated, these references representing a certain course and/or speed vector for flying the air vehicle 10 and/or coordinates in the flying field surrounding the moving target 11. The air vehicle 10 is instructed to fly in accordance with said guidance references accordingly. According to a preferred embodiment of the method, the guidance references given as an input to the Flight Control System (FC) are based in first instance on a reference location, generated by the tracking algorithm. The reference location is given with respect to the moving target 11, i.e. the reference system used for the purpose of generating coordinates of the reference location is preferably a reference system centered in the moving target 11, so the coordinates of the reference location are given as a position vector with respect to the moving target 11.

Based on the reference location generated by the tracking algorithm, the tracking algorithm calculates the guidance references which are given as an input to the Flight Control System.

The Flight Control System (FC) normally needs as much as three different guidance references to fully determine the air vehicle motion (it may expose less than three to the user though). One of these three references defines the lateral motion of the air vehicle. The other two references define the vertical motion of the air vehicle.

The guidance references may be selected among any combination of one or more of at least:

a. a desired course for the air vehicle 10, to fly towards the generated reference location;

b. a desired speed for the air vehicle 10 (either expressed as airspeed or groundspeed), to fly towards the reference location;

c. a desired altitude for the air vehicle 10;

As already said, some Flight Control Systems (FC) may expose less than three guidance references. This means that some FC's do not allow receiving as much as three input guidance references; for instance, some Flight Control Systems may establish their own value for air vehicle's speed, once they have received inputs of a desired course and a desired altitude

A desired course for the air vehicle 10, a desired altitude for the air vehicle 10 and a desired speed for the air vehicle 10 are first calculated in terms of the reference location generated by the tracking algorithm. Nevertheless, since the Flight Control System which receives the guidance references delivered by the tracking algorithm has no knowledge of the actual location and speed of the moving target 11, the generated guidance references must be translated from coordinates relative to the speed and location of the moving target 11 to absolute coordinates expressed in a Global Reference System, so they can be delivered from the tracking algorithm to the Flight Control System (FC), in a manner that is fully understandable by the Flight Control System.

The guidance references delivered to the Flight Control System (FC) make the air vehicle 10 fly towards the reference location, following a desired course.

Since some Flight Control Systems may only allow receiving inputs of certain guidance references expressed through certain magnitudes or parameters, the method underlying the present disclosure provides that the guidance references may be given by means of certain parameters. These parameters may include any combination of one or more of at least:

- a desired pitch and/or path angle;

- a desired throttle;

- a desired vertical speed;

- a desired roll angle, and;

- a particular waypoint (longitude and latitude), this waypoint being expressed in absolute coordinates (as explained above, all guidance references must be expressed in absolute coordinates, for them to be understood by the Flight Control System).

Thus, after generating the reference location, the tracking algorithm calculates the guidance references and delivers said guidance references in terms of parameters (whether it be a particular waypoint in the flying field or any other type of parameter) expressed in terms of absolute coordinates.

As the moving target 11 keeps continuously moving, the references generated are dynamic, therefore the method comprising dynamically generating new guidance references along the whole duration of the tracking mission. Therefore, the method iteratively calculates new guidance references.

Any parameters for defining the guidance references may be used, provided that the resulting guidance references are based on the reference location, and the reference location is calculated, in each iteration of the method, as a relative position with respect to the current position of the moving target 11.

Therefore, the trajectory which is finally followed by the air vehicle 10 changes and adapts dynamically, according to the moving target's position and speed.

According to a preferred embodiment of the method of tracking a moving target 11 from an air vehicle 10, the tracking algorithm calculates the guidance references based on two main criteria:

- avoiding that the air vehicle 10 becomes detected by the moving target 11 being tracked/followed, and;

- avoiding that the air vehicle 10 loses visual and/or sensor detection contact with the moving target 11.

Apart from the mentioned criteria on which the tracking algorithm bases the calculation of the guidance references, the behavior policies may also provide information on limitations that affect low level loops of the Flight Control system (FC), like pitch and roll angles. For instance, there may exist a Gimbal behavior policy, which imposes some limitations on the pitch and roll angles and/or course of the air vehicle, so that the air vehicle's own fuselage does not interrupt the line-of-sight that connects the air vehicle's sensors (e.g. a camera) with the moving target 11.

According to the mentioned main criteria of the tracking algorithm, two boundaries 12, 13 surrounding the position of the moving target 11 are established; as the moving target 11 keeps moving, the two boundaries 12, 13 are dynamically variable (and therefore, they are dynamically calculated). According to a possible embodiment of the method, the boundaries 12, 13 are circular. Nevertheless, these boundaries may have any generic shape. The boundaries preferably have the moving target 11 as their center point.

In each iteration of the method, the tracking problem is solved, for a given altitude, in two dimensions, 2D. It depends on each particular behavior policy, which may consider a terrain elevation map, to establish the particular altitude at which the tracking problem is to be solved by the tracking algorithm in each iteration.

The first boundary 13 establishes a minimum desired distance of the air vehicle 10 with respect to the moving target 11, so that the air vehicle 10 remains undetected. The second boundary 12 establishes a maximum desired distance of the air vehicle 10 with respect to the moving target 11, so that the air vehicle 10 doesn't lose sensor detection contact with the moving target 11.

The first boundary 13 is established taking into consideration the detectability of the air vehicle 10 by the moving target 11. According to a possible behavior policy, the detectability is considered in terms of the possibility that the air vehicle 10 remains invisible by the moving target 11. For this purpose, it is considered that the air vehicle 10 must keep out of sight from the moving target 11. According to another possible behavior policy, the detectability is considered in terms of the possibility that the air vehicle 10 remains unheard by the moving target 11. For this purpose, the noise footprint of the air vehicle 10 may be considered, so that, as said before, the air vehicle 10 remains unheard by the moving target 11 during the tracking mission.

According to a preferred embodiment of the method, another behavior policy is used to establish the second boundary 12; the second boundary 12 may be established taking into consideration that the sensors of the air vehicle 10 must not lose contact (sensor detection contact) with the moving target 11, i.e. line of sight and/or capability of radar detection of the moving target 11 must be ensured during the whole tracking mission.

In any case, it is the business of each particular behavior policy to indicate the criteria with which the first boundary 13 and the second boundary 12 are established.

According to a preferred embodiment of the method, the air vehicle 10 is instructed to keep flying at a preferred distance from the moving target 11, said distance constituting a preferred location profile 14 (which, as shown in the Figures, may particularly be a circle) located between the first boundary 13 and the second boundary 12. The air vehicle 10 is instructed to track the moving target 11 preferably from behind the moving target 11, in a preferred position (O) located at the preferred location profile 14. The preferred position (O) of the air vehicle 10 is (when the dynamic circumstances of the moving target 11 and the air vehicle 10 allow so) a position right behind the moving target 11, at a determinate altitude. Nevertheless, an alternative behavior policy for tracking moving targets 11 may instruct the air vehicle 10 to track the moving target 11 from positions other from those behind the moving target 11.

Despite using circles as examples of the first boundary 13, second boundary 12 and preferred distance, the boundaries and preferred distance may configure any other alternative shape, according to alternative behavior policies. This alternative shape may be expressed in polar coordinates with respect to the position of the moving target 11, such that the shape may be given as a function "r= f(theta)", where "r" is a distance with respect to the moving target 11 and "theta" is an angle established with respect to a certain origin of the polar angular coordinate.

Figure 2 shows a schematic representation of the moving target 11 and the air vehicle 10 (for instance, a fixed-wing air vehicle, as represented in Figure 2). The first boundary 13, the second boundary 12 and the preferred location profile 14 are represented by the projections on the ground level of the first boundary 13, second boundary 12 and preferred location profile 14 on a horizontal plane, located at the actual altitude of the air vehicle 10. The relative altitude (H) of the air vehicle 10 with respect to the moving target 11 is also represented in Figure 2.

The term "$R_{min}$" represents the radius of the first boundary 13. The term "$R_{max}$" represents the radius of the second boundary 12. The term "$R_{opt}$" represents the radius of the preferred location profile 14. The term "O" represents the preferred position. According to a preferred embodiment of the method presented herein, the preferred position (O) is generated as a preferred reference for the air vehicle 10.

As already introduced, there may be certain circumstances that hinder that the air vehicle 10 follows the moving target 11 at a position right behind the moving target 11. For instance, if the moving target 11 is moving too slow, and the air vehicle 10 minimum groundspeed is higher than the actual speed of the moving target 11, the air vehicle 10 cannot reliably perform its tracking mission by following the moving target 11 from a position right behind the moving target 11, without risking trespassing the first boundary 13. Since this risk is unacceptable for most tracking missions, the method comprises in those cases (according to a particular behavior policy) generating two alternating references according to two alternating positions, represented as "O1" and "O2" in Figure 2, and instructing the air vehicle 10 to alternately fly towards either one of these two alternating positions (O1, 02) as long as the moving target 11 keeps moving at a speed lower than the minimum groundspeed of the air vehicle 10, under actual wind conditions.

The alternating positions (O1, 02) are located preferably behind the moving target 11; the vertical planes comprising the alternating positions (O1, 02) and the moving target 11 are separated an angle "$\alpha$" (as represented in

Figure 2) at each side from the vertical plane comprising the preferred position (O) and the moving target 11.

There may be also certain circumstances in which the actual speed of the moving target 11 is higher than the air vehicle's maximum groundspeed, under actual wind conditions. In such cases, if this circumstance lasts for too long, it is inevitable that the air vehicle 10 ends up losing sensor detection contact with the moving target 11.

The method comprises generating a first reference comprising the coordinates of the preferred position (O), and instructing the air vehicle 10 to fly towards said first reference.

Since it is assumed that a reliable estimation of the motion of the moving target 11 is available by the air vehicle's sensors, if it is assessed (by means of a microcontroller unit either located onboard the air vehicle 10 or at a Control Station) at any time during the tracking mission, that the moving target's actual speed is lower than the air vehicle's minimum groundspeed, under actual wind conditions, the method comprises generating at least two alternate references comprising the coordinates of either two alternate positions (O1, 02) preferably located behind the moving target 11, at the preferred distance constituting the preferred location profile 14 surrounding the moving target 11.

The method presented herein guarantees that the tracking mission is carried out efficiently; in this sense, the whole flight envelope of the air vehicle 10 is used for the purpose of the mission to widen the different conditions (to increment the number of possible locations for the air vehicle 10) in which the method succeeds to provide a valid solution (an acceptable air vehicle's location from which to reliably follow and track the moving target 11). It is in the process of translation of the reference location of the air vehicle 10 (relative to the moving target 11) into a guidance reference for the FC system where the limitations provided by the Aircraft Performance Model (APM) play their role, in order to ensure that the air vehicle 10 is not flown into its operational limits.

Using the whole flight envelope of the air vehicle means that:

- the tracking algorithm not only considers the speed of the air vehicle 10, but also dynamically modifies it in order to ensure that the mission is carried out in the most efficient manner, meaning that the air vehicle 10 can fly as slow as it is able to, if the mission environment requires so (e.g. the moving target 11 is moving very slow), or either that the air vehicle 10 can fly at faster speeds, and also proportional to how far the Air vehicle is from the reference location, and;

- the air vehicle performance's limitations are considered in order to ensure that the algorithm does not violate the air vehicle's operational limits, putting the integrity of the air vehicle 10 at risk.

According to what has been mentioned above, a particular behavior policy may include that the guidance algorithm modifies the air vehicle's altitude, thus instructing the air vehicle 10 to vary its altitude if there is an object (a mountain, a hill, a wall, etc.) that may interrupt the line-of-sight between the air vehicle 10 and the moving target 11.

The following is a more detailed description of the architecture components depicted in Figure 1, according to a preferred embodiment.

The Moving Target State Estimator Module 106 is an external component that is responsible for the estimation of the motion (position and velocity) of the moving target 11 (for instance, a GMT). The particular manner in which this functionality is achieved is out of the scope of the present disclosure. It is assumed that this component exists and provides such information accurately, usually supported in computer vision and sensor data fusion and filtering algorithms. This component provides the Tracking Infrastructure Module 100 with data on the position and velocity of the moving target 11.

The Navigation System Module 110 is also an external component that is responsible for estimating the state vector of the air vehicle 10, for instance an UAV (position, velocity, attitude and their derivatives over time). This estimation is usually carried out by means of some fusion and filtering algorithms of data coming typically from onboard sensors (GNSS, accelerometers, gyroscopes, magnetometers, pressure sensors, etc.) like EKF approaches, etc. Again, it falls out of the scope of the present disclosure the particular technology used to estimate the air vehicle's state vector. This component provides the Tracking Infrastructure Module 100 with the air vehicle's state vector.

The Flight Control System Module 112 is an external component whose responsibility is to issue the appropriate signals to the air vehicle's 10 actuators in order to follow the guidance references that define the mission of the air vehicle 10. The guidance references are preferably generated in the Tracking Infrastructure Module 100, therefore resulting in a fully autonomous system with no need of human intervention. The guidance references are preferably defined by target altitude, course and airspeed.

The Aircraft Performance Model Module 108 is an external component comprising the movement characterization and maneuverability characterization of each particular air vehicle 10. It also defines limitations (in airspeeds, altitudes, attitude angles, mass, etc.) and operational limits of the air vehicle 10.

The Air Vehicle Behavior Policies Module 102 encompasses a group of limitations and constraints associated to the behavior of the air vehicle 10 (for instance an UAV) that affect the particular manner in which the moving target 11 (for instance a GMT) is to be tracked, that is, how the GMT Tracking problem is to be stated. In particular, the problem may involve the following parameters: vertical distance, H, between the air vehicle 10 and the moving target 11, detectability distance and/or shape of the detectability area, optimum distance and maximum distance of the air vehicle 10 with respect to the moving target 11. The following policies (whose particular solutions for each possible air vehicle 10 fall out of the scope of the present disclosure) have been identified in order to cover a wide range of cases.

- Noise footprint policy: a possible embodiment of the implementation of this policy may involve defining the detectability threshold of the air vehicle 10, being defined as the minimum distance at which the air vehicle 10 is detectable by a moving target 11 based on its noise footprint. In order to apply such policy, a noise map is defined which is responsible for this policy. Regarding the statement of the moving target tracking problem stated in the Tracking Infrastructure Module 100, this policy provides constraints on the altitude of the air vehicle 10 with respect to the moving target 11, the detectability distance as well as in the aperture angle alpha considered in the cases where the moving target 11 is moving slower than the capability of the air vehicle 10. Alternatively, the detectability threshold may be formed of another shape, rather than a circle determined by the detectability distance.

- Visual Identification Policy: a possible embodiment of the implementation of this policy may involve defining the detectability threshold of the air vehicle 10 being defined as the minimum distance at which the air vehicle 10 is visually detectable by a moving target 11. Symmetrically to the previous policy, in regard to the statement of the moving target tracking problem, this policy provides constraints on the altitude of the air vehicle 10 with respect to the moving target 11, the detectability distance as well as in the aperture angle alpha considered in the cases where the moving target 11 is moving slower than the capability of the air vehicle 10.

- Obstacle/Terrain elevation policy: a possible embodiment of the implementation of this policy may involve defining altitude constraints in the statement of the moving target tracking problem that have to be fulfilled by the air vehicle 10 in order to keep line-of-sight with the moving target 11.

- Gimbal-sensor policy: a possible embodiment of the implementation of this policy may involve defining limitations on the maximum distance to the moving target 11 (at farther distances, the sensors cannot do its job properly) and also limitations regarding the attitude of the air vehicle 10 so that direct line-of-sight between the sensor (camera for instance) and the moving target 11 is guaranteed. In this sense, limits of the pan and tilt angles of the gimbal are taken into account to ensure that such limits are not violated in order to keep line-of-sight contact between the sensor and the moving target 11. This policy also addresses the issue of the so-called occlusion map, in order to guarantee that in no particular attitude the air vehicle 10 frame itself can blind the sensor.

- Others: particular policy-based architectures that are flexible enough in order to accommodate other user preferred policies that affect the particular statement of the moving target tracking problem.

According to a preferred embodiment of the method of tracking a moving target 11 from an air vehicle 10, the Tracking Algorithm Module 104 makes a set of assumptions in the statement of the moving target tracking problem:

- The altitude of the air vehicle 10 is a constant during the resolution of the problem, and it is normally the actual altitude of the air vehicle 10. Nevertheless, a particular policy may define a desired altitude which may be provided as a guidance reference to the flight control system. As mentioned above, between consecutive computations of the tracking algorithm, the reference location for the air vehicle 10 may change, and so the altitude provided by a particular policy.

- There are three different areas, comprising any generic shape, which define a detectability zone, a preferred location and a non-detection zone for the air vehicle 10 to track the moving target 11; as already introduced above, according to a possible embodiment of the method (according to a possible embodiment for this policy), these three areas are defined by means of the horizontal distance ($R_{min}$, $R_{max}$, $R_{opt}$) between the air vehicle 10 and the moving target 11, such distances also defined by the air vehicle 10 behavior policies.

- As has already been said, a preferred location for the air vehicle 10 from which to track the moving target 11 is, according to a possible embodiment of the method (according to a possible embodiment for this policy), a position right behind the moving target 11 at $R_{opt}$ distance. In case this be not possible for speed restrictions, the air vehicle 10 swings around the moving target 11 at a distance $R_{opt}$ back and forth along a sector of aperture alpha.

- It is critical that the air vehicle 10 avoids the detectability zone (avoids getting inside area of $R_{min}$) over all restrictions.

- The position and speed of the moving target 11 are known.

- The wind speed and direction local to the air vehicle 10 position are also known.

With these assumptions in mind, the GMT Tracking problem has three different scenarios, as also introduced above in this description:

- Problem case 1: The moving target 11 is moving within the groundspeed limits of the air vehicle 10. In this case, as mentioned in the assumptions (and also according to a possible behavior policy), the air vehicle 10 stays right behind the moving target 11. Other behavior policies in which the tracking algorithm may be based, could indicate for instance, as has already been said, that when the moving target 11 is moving within the groundspeed limits of the air vehicle 10, the air vehicle 10 varies its position relative to the moving target 11 for taking several images of the moving target 11 from different perspectives, for better identifying the moving target 11.

- Problem case 2: The moving target 11 is moving faster than the fastest groundspeed of the air vehicle 10. In this case, it is unavoidable that the distance between the air vehicle 10 and the moving target 11 increases over time until the moving target 11 eventually gets lost. In order to delay such event as much as possible, the preferred course of action in this case is to keep the air vehicle 10 at its maximum groundspeed in the same direction as the moving target 11 is moving.

- Problem case 3: The moving target 11 is moving slower than the minimum groundspeed of the air vehicle 10. According to a possible behavior policy, the air vehicle 10 flies at its minimum groundspeed, moving back and forth between alternating positions (O1, 02) at a preferred distance $R_{opt}$. Other behavior policies could indicate, as has already been said, that, instead of moving at a preferred distance from the moving target 11, the air vehicle 10 moves around the moving target 11, without trespassing a contour surrounding the moving target 11, the contour having any predetermined shape established by each particular behavior policy.

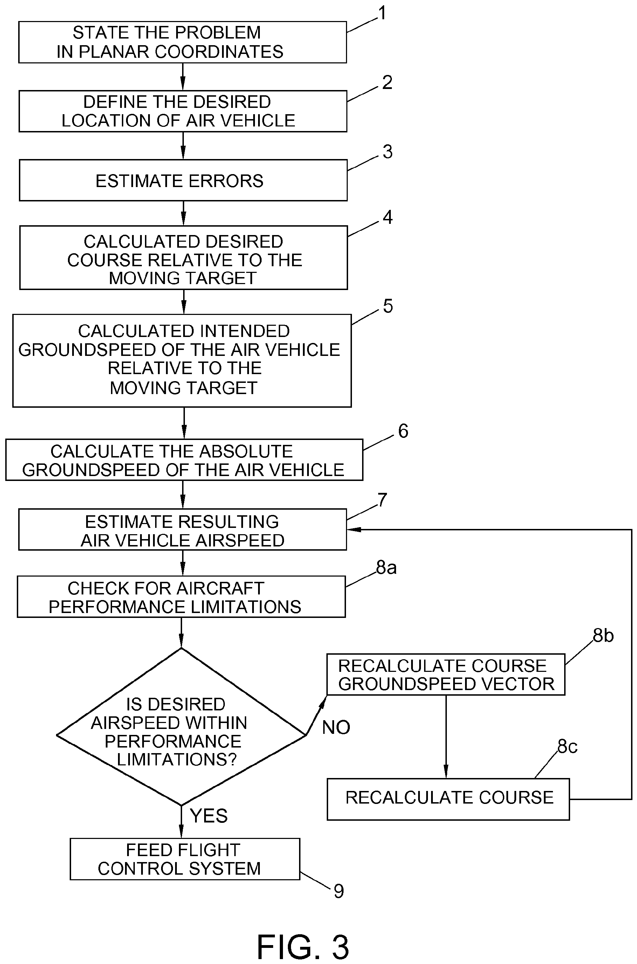

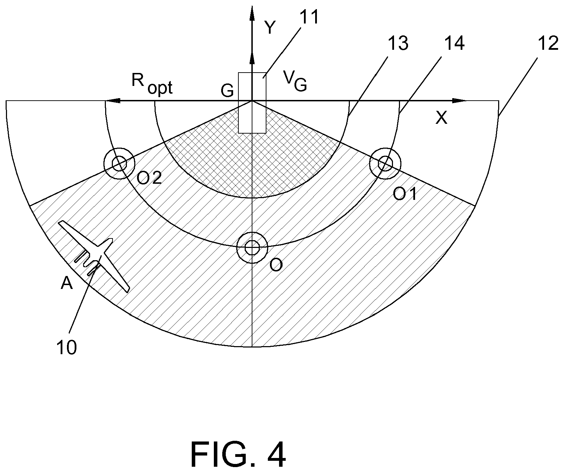

The following is a description of a preferred embodiment of the tracking algorithm, performing the method of the present disclosure. The steps of the tracking algorithm are schematically depicted in Figure 3. When describing the steps of the algorithm, reference is to be made hereinafter to Figures 4, 5 and 6.

The tracking algorithm to generate guidance references to track the moving target 11 (a GMT for instance) is based in stating the problem of the relative motion of the air vehicle 10 (point A in Figures 4, 5 and 6), which has been represented as a fixed-wing air vehicle 10 by way of example, with respect to the moving target 11 (point G in Figures 4, 5 and 6). The key of the tracking algorithm is therefore to calculate the relative speed vector of A with respect to G.

The particular exemplary algorithm shown in Figure 3 is made up of 9 steps. According to Figure 3, the algorithm performing the method comprises:

- Projecting 1 into planar coordinates both the coordinates of the air vehicle 10 and the coordinates of the moving target 11, in order to easily solve the problem. The projection may be orthomorphic (conformal) in order to preserve angles. The problem is then stated in the Cartesian reference system defined by:

     o Setting the coordinates origin in the actual location of the moving target 11;

     o Establishing the Y coordinated axis in the direction of motion of the moving target 11;

     ◦ Establishing the X coordinated axis so that the resulting coordinates' system is right-handed oriented.

- Defining 2 a reference location of the air vehicle 10 which, according to the different contemplated scenarios mentioned above, may either be:

     ◦ Position O in problem case 1;

     ◦ The actual position of the air vehicle in problem case 2;

     ◦ Either Position O, position O1 or position 02 in problem case 3.


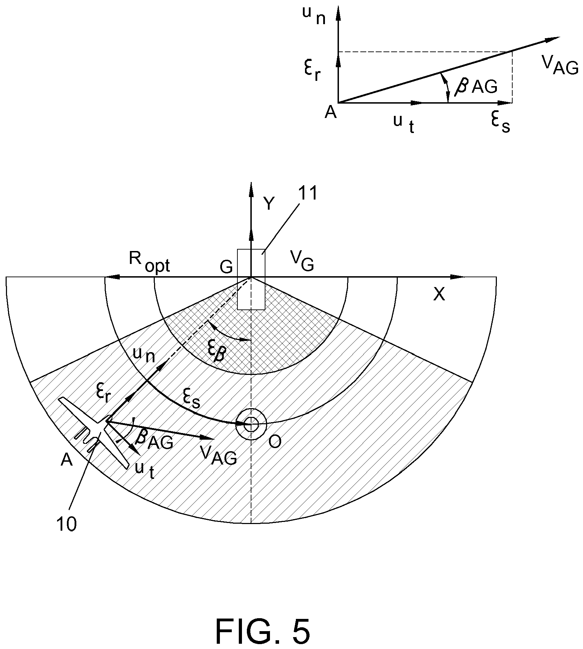

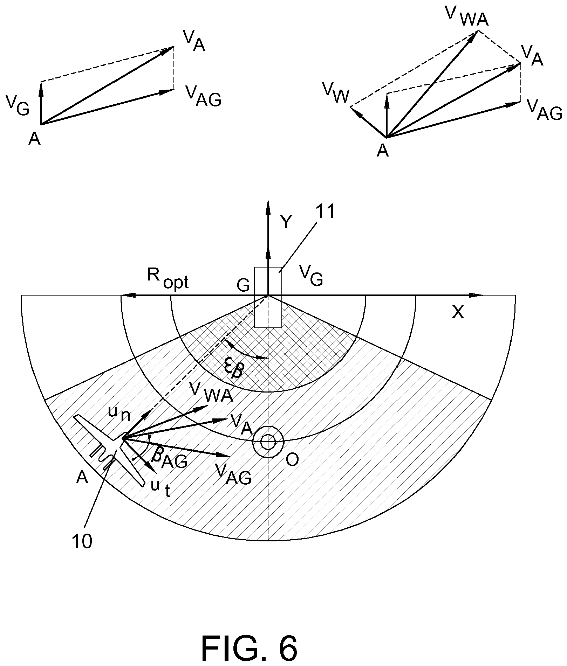

For the sake of a clear representation, Figures 5 and 6 represent the problem case 1, i.e. the intended air vehicle's location is defined by position O.

- Estimating errors 3 (or divergences) with respect to the reference location of the air vehicle 10 defined in the previous step. Two different errors are defined and represented in Figure 5:

  ◦ <u>Radial error:</u> $\varepsilon_r = R_{opt} - |GA|$.
  Represents how far is the air vehicle 10 is from the reference location, in the normal direction, wherein for the purposes of the radial error, the reference location is given by its distance to the moving target 11, $R_{opt}$ (the radial distance among the moving target 11 and the reference location).
  ◦ <u>Tangential error:</u> $\varepsilon_s = \varepsilon_\theta * R_{opt}$, where $\varepsilon_\theta = \theta_A - \theta_o$.
  This error represents how far the air vehicle 10 is from the reference location in the tangential direction.

- Calculating 4 the desired direction of the relative motion of the air vehicle 10 with respect to the moving target 11. The computed errors are expressed in an n-t (normal - tangential) reference system centered in the air vehicle 10 (Reference system A, $u_n$, $u_t$), the direction of the relative speed vector of the air vehicle 10 with respect to the moving target 11 is defined by the expression (see Figure 5):

$$\beta_{AG} = \text{atan}\, \frac{\epsilon_r}{\varepsilon_s}$$

It has to be noted that even though the air vehicle 10 may be placed at a distance $R_{opt}$, if it is right in front (instead of behind) of the moving target 11, the radial error is null ($\varepsilon_r = 0$) while the tangential error is very high ($\varepsilon_s = \pi * R_{opt}$); in order to correct such error, the air vehicle 10 must move quickly in the tangential direction, avoiding getting into the detectability zone.

- Calculating 5 the magnitude of the relative speed vector of the air vehicle 10 with respect to the moving target 11. A proportional (proportional to the errors calculated) response of the air vehicle 10 may eventually be desired, so that, if the air vehicle 10 is far from the reference location (in either the radial direction, the tangential direction or both) it reacts faster than in the case it is closer to the reference location (in which case the desired relative speed must be minimized in order to optimize the process). This behavior fits very well in a PID approach from classic control theory.

The magnitude of the relative speed vector of the air vehicle 10 with respect to the moving target 11 may be defined by:

$$V_{AG} = \left( kp_r * \varepsilon_r + kd_r * \frac{d\varepsilon_r}{dt} + ki_r * \int_{t_0}^{t_1} \varepsilon_r * dt \right)$$
$$+ \left( kp_s * \varepsilon_s + kd_s * \frac{d\varepsilon_s}{dt} + ki_s * \int_{t_0}^{t_1} \varepsilon_s * dt \right)$$

wherein:

  ◦ $Kp_r$ and $Kp_s$ are proportional to the radial and tangential errors respectively;

  ◦ $Kd_r$ and $Kd_s$ are proportional to the variation over time of the radial and tangential errors respectively;

  ◦ $Ki_r$ and $Ki_s$ are proportional to the integration during a particular time interval of the radial and tangential errors respectively.

It has to be noted that, even though the magnitude of the relative speed vector of the air vehicle 10 with respect to the moving target 11 has been defined by means of full PID's, it is up to the user to fully characterize them; for instance a fully proportional response would be given by only 2 parameters ($Kp_r$ and $Kp_s$).

Notwithstanding the abovementioned, the magnitude of the relative speed vector of the air vehicle 10 with respect to the moving target 11 may be calculated according to any existing control theory (other than a PID-based control theory) which combine one or more of the estimated errors.

- Calculating 6 the absolute groundspeed, $V_A$, of the air vehicle 10. This can be achieved by simple vector algebra, as the groundspeed of the moving target 11 is assumed to be known. Vector $V_A$ may be obtained from the expression:

$$\vec{V_A} = \vec{V_{AG}} + \vec{V_G}$$

wherein:

- $V_A$ is the absolute groundspeed of the air vehicle 10;

- $V_{AG}$ is the relative speed of the air vehicle 10 with respect to the moving target 11;

- $V_G$ is the groundspeed of the moving target 11.

- Calculating 7 the airspeed of the air vehicle 10. So far all speed magnitudes involved in the problem are groundspeed, which is not a common magnitude used in aviation (as all vehicle performances and limitations depend rather on airspeed). Therefore, the natural step is now calculating the resulting airspeed, again with simple vector algebra, taking into account the local wind conditions. The following expression may be used:

$$\vec{V_{WA}} = \vec{V_W} + \vec{V_A}$$

wherein:

- $V_{WA}$ is the airspeed of the air vehicle 10;

- $V_W$ is the wind vector at the air vehicle's position;

- $V_A$ is the absolute groundspeed vector of the air vehicle 10, calculated in the previous step.

- Checking 8a performance limitations.
If the airspeed previously calculated falls below the stall speed or above the maximum airspeed values (these values being taken with a predetermined tolerance range, in order to compensate a possible uncertainty in wind estimation, so as to prevent that the air vehicle accidentally reaches its stall speed and/or maximum airspeed limits) of the air vehicle 10 (depending on the particular local wind field as well as the aforementioned PID parameters), then the airspeed is trimmed to such values, this involving recalculating the groundspeed vector 8b of the air vehicle 10, recalculating course 8c, so that the groundspeed vector points towards the reference location, and returning to step 7, iterating the process once again until a valid solution is found.

- Providing 9 a guidance reference to the air vehicle 10. These guidance references may include at least three types of references or magnitudes that may be provided to the air vehicle 10 Flight Control System (FC). These references, which univocally define how the air vehicle 10 is to be operated, are based on common magnitudes used in Flight Control Systems as guidance references:

- A desired course (given by the direction of the absolute groundspeed vector of the air vehicle 10); this desired course may be provided according to any combination of parameters (for example, heading or bearing in either magnetic or true flavors may be provided; also the absolute coordinates of the reference location may be provided, bearing in mind that the reference location is continuously recalculated in each iteration of the method, as the moving target 11 and/or the air vehicle keep moving);

- A desired airspeed (given by the module of the airspeed of the air vehicle 10, or any derivative magnitude);

- A desired altitude, taking into account the air vehicle 10 behavior policies.

The guidance references are provided to the FC system, with respect to the moving target's state vector (estimated position, speed, etc.). Although the guidance reference may include a desired course (i.e. it does not specify a desired location, but only a desired course), a reference location of the air vehicle 10 with respect to the moving target's estimated location must be calculated first, in order to generate a guidance reference as a desired course pointing to that calculated reference location.

As already said, the guidance references are continuously re-calculated and given to the FC system of the air vehicle 10, so that the air vehicle 10 dynamically adapts its motion to the tracking mission requirements (to the moving target's state vector).

There are also some limitations to be provided to the Flight Control System; such is the case of those provided by the Gimbal-sensor policy that define an attitude limitations map (pairs of pitch/roll limits) that have to be taken into account by the Flight Control System in order to ensure that the particular sensor is in line-of-sight with the moving target 11, i.e. that the air vehicle's fuselage does not interrupt the line-of-sight connecting each sensor with the moving target 11..

Further, embodiments of the method disclosed may include a computer programmed to operate in accordance with the method described herein. The computer may be associated with a conventional flight simulator. In turn, the computer may include a processor and a memory for a computer program, that when executed causes the processor to operate in accordance with the method described herein. The computer program may also be embodied in a computer readable medium having stored therein the computer program.

## Claims

1. A method of tracking a moving target (11) from an air vehicle (10) comprising determining an estimated location and speed of at least one moving target (11) and instructing an air vehicle (10) to follow the moving target (11) **characterized in that** it comprises:

   ◦ determining a detectability zone surrounding the moving target (11);
   ◦ calculating at least one reference location for the air vehicle 10, relative to the estimated location of the moving target (11), wherein the reference location is placed out of the detectability zone;
   ◦ generating at least one guidance reference to command the air vehicle (10) for tracking the moving target (11), wherein the guidance reference comprises any combination of one or more of at least:

      ▪ a desired course to fly towards the calculated reference location;
      ▪ a desired speed to fly towards the calculated reference location;
      ▪ a desired flying altitude, and;

   ◦ instructing the air vehicle (10) to fly according to the generated guidance reference;

   wherein the determination of the detectability zone, the calculation of a reference location and the generation of at least one guidance reference are performed according to at least one predetermined behavior policy of the air vehicle (10).

2. The method of tracking a moving target (11) from an air vehicle (10) according to claim 1, **characterized in that** the desired speed is calculated based on the divergence existing among actual location of the air vehicle (10) and the reference location of the air vehicle (10).

3. The method of tracking a moving target (11) from an air vehicle (10) according to claim 2, **characterized in that** the divergence existing among the actual location of the air vehicle (10) and the at least one reference location of the air vehicle (10) is calculated based on any combination of one or more of at least:

   ◦ angular deviation existing between:

      ▪ a first ground imaginary line which is a projection on a horizontal plane of a first imaginary line which links the moving target (11) with the air vehicle (10); and
      ▪ a second ground imaginary line which is a projection on the horizontal plane of a second imaginary line which links the moving target (11) with the at least one reference location of the air vehicle (10), and;

   ◦ radial deviation existing between:

      ▪ a circumference centered in the moving target (11) and passing along a projection in the horizontal plane of the actual location of the air vehicle (10); and
      ▪ a circumference centered in the moving target (11) and passing along a projection in the horizontal plane of the at least one reference location of the air vehicle (10).

4. The method of tracking a moving target (11) from an air vehicle (10) according to claim 3, **characterized in that** the desired speed at which the air vehicle (10) flies towards the at least one reference location is calculated according to any combination of one or more of at least proportional, integral and derivative criteria, which mathematically combine any combination of one or more of at least the angular deviation and the radial deviation.

5. The method of tracking a moving target (11) from an air vehicle (10) according to claim 1, **characterized in that** the desired speed to fly towards the reference location is calculated based on wind velocity local to the actual location of the air vehicle (10).

6. The method of tracking a moving target (11) from an air vehicle (10) according to claim 1, **characterized in that**, according to a predetermined behavior policy, the detectability zone is a circle in a horizontal plane, centered in the moving target (11).

7. The method of tracking a moving target (11) from an air vehicle (10) according to claim 1, **characterized in that** a predetermined behavior policy for determinining the detectability zone is based on any combination of one or more of at least:

   o likeliness that the moving target (11) detects sound emitted by the air vehicle (10), wherein this likeliness is based on features of the air vehicle (10), and;
   o likeliness that the moving target (11) visually detects the air vehicle (10), wherein this likeliness is based on features of the air vehicle (10).

8. The method of tracking a moving target (11) from an air vehicle (10) according to claim 1, **characterized in that** a predetermined behavior policy for calculating the reference location is based on placing the reference location among a first boundary (13), which is a limit for the detectability zone, and a second boundary (12), which is a limit beyond which the air vehicle (10) is not likely to detect the moving target (11), wherein this likeliness is based on features of the air vehicle (10).

9. The method of tracking a moving target (11) from an air vehicle (10) according to claim 8, **characterized in that**, according to a predetermined behavior policy, the first boundary (13) and the second boundary (12) have the shapes of circumferences in a horizontal plane, the circumferences centered in the moving target (11).

10. The method of tracking a moving target (11) from an air vehicle (10) according to claim 1, **characterized in that**, according to a predetermined behavior policy, the reference location of the air vehicle (10) is placed at an altitude which is adjusted depending on terrain characteristics, so that if there comes up an obstacle which hinders detection of the mobile target (11) from the air vehicle (10), the altitude of the reference location is accordingly raised or lowered.

11. The method of tracking a moving target (11) from an air vehicle (10) according to claim 1, **characterized in that** it comprises assessing whether the estimated speed of the moving target (11):

   ∘ is higher than maximum groundspeed allowed for the air vehicle (10), under actual wind conditions;
   ∘ is lower than minimum groundspeed allowed for the air vehicle (10), under actual wind conditions; or
   ∘ is equal or falls between the minimum groundspeed allowed for the air vehicle (10) and the maximum groundspeed allowed for the air vehicle (10), under actual wind conditions.

12. The method of tracking a moving target (11) from an air vehicle (10) according to claim 11, **characterized in that** if the speed of the moving target (11) is lower than the minimum groundspeed of the air vehicle (10), under actual wind conditions, the method comprises:

   ∘ generating at least: a first guidance reference and a second guidance reference, wherein the first guidance reference comprises at least one first reference location for the air vehicle (10) and the second guidance reference comprises at least one second reference location for the air vehicle (10), wherein the first reference location and the second reference location are placed out of the detectability zone, and;
   ∘ instructing the air vehicle (10) to alternately fly towards the at least one first reference location and towards the at least one second reference location, according to the generated first guidance reference and second guidance reference.

13. The method of tracking a moving target (11) from an air vehicle (10) according to claim 11, **characterized in that** if the speed of the moving target (11) is higher than the maximum groundspeed of the air vehicle (10), under actual wind conditions, the method comprises generating at least one guidance reference comprising at least one reference location for the air vehicle (10), wherein the reference location is placed out of the detectability zone and wherein the method comprises instructing the air vehicle (10) to fly towards the reference location at the maximum groundspeed allowed for the air vehicle (10), under actual wind conditions.

14. The method of tracking a moving target (11) from an air vehicle (10) according to claim 11, **characterized in that** if the speed of the moving target (11) is equal or falls between the minimum groundspeed allowed for the air vehicle (10) and the maximum groundspeed allowed for the air vehicle (10), under actual wind conditions, the method comprises generating at least one guidance reference comprising at least one reference location for the air vehicle (10), wherein the reference location for the air vehicle is placed out of the detectability zone and right behind the moving target (11).

15. A computer readable medium **characterized in that** it comprises instructions for carrying out the method described in claims 1 to 14.

16. A system for tracking a moving target (11) from an air vehicle (10) **characterized in that** it comprises a Tracking Infrastructure Module (100) which in turn comprises an Air Vehicle Behavior Policies Module (102) and Tracking Algorithm Module (104), wherein the Tracking Algorithm Module (104) is configured to perform the method described in claims 1 to 14, according to behavior policies stored in the Air Vehicle Behavior Policies Module (102).

**Patentansprüche**

1. Verfahren zum Verfolgen eines beweglichen Ziels (11) von einem Luftfahrzeug (10), umfassend das Bestimmen eines geschätzten Standortes und einer Geschwindigkeit mindestens eines beweglichen Ziels (11) und das Anweisen eines Luftfahrzeugs (10), dem beweglichen Ziel (11) zu folgen, **dadurch gekennzeichnet, dass** es Folgendes umfasst:

   ◦ Bestimmen einer Erfassbarkeitszone, die das bewegliche Ziel (11) umgibt;
   ◦ Berechnen mindestens eines Referenzstandortes für das Luftfahrzeug 10, in Bezug auf den geschätzten Standort des beweglichen Ziels (11), wobei der Referenzstandort außerhalb der Erfassbarkeitszone angeordnet ist;
   o Erzeugen mindestens einer Führungsreferenz, um dem Luftfahrzeug (10) das Verfolgen des beweglichen Ziels (11) zu befehlen, wobei die Führungsreferenz eine beliebige Kombination eines oder mehrerer von mindestens dem Folgenden umfasst:

      ▪ eines gewünschten Kurses, um zu dem berechneten Referenzstandort zu fliegen;
      ▪ einer gewünschten Geschwindigkeit, um zu dem berechneten Referenzstandort zu fliegen;
      ▪ einer gewünschten Flughöhe, und;

   ◦ Anweisen des Luftfahrzeugs (10), gemäß der erzeugtem Führungsreferenz zu fliegen;

   wobei die Bestimmung der Erfassbarkeitszone, die Berechnung eines Referenzstandortes und die Erzeugung mindestens einer Führungsreferenz gemäß mindestens einer vorbestimmten Verhaltensrichtlinie des Luftfahrzeugs (10) vorgenommen werden.

2. Verfahren zum Verfolgen eines beweglichen Ziels (11) von einem Luftfahrzeug (10) nach Anspruch 1, **dadurch gekennzeichnet, dass** die gewünschte Geschwindigkeit basierend auf der Abweichung berechnet wird, die zwischen dem tatsächlichen Standort des Luftfahrzeugs (10) und dem Referenzstandort des Luftfahrzeugs (10) besteht.

3. Verfahren zum Verfolgen eines beweglichen Ziels (11) von einem Luftfahrzeug (10) nach Anspruch 2, **dadurch gekennzeichnet, dass** die zwischen dem tatsächlichen Standort des Luftfahrzeugs (10) und dem mindestens einen Referenzstandort des Luftfahrzeugs (10) bestehende Abweichung basierend auf einer beliebigen Kombination eines oder mehrerer von mindestens dem Folgenden berechnet wird:

   ◦ einer Winkelabweichung, die zwischen Folgendem besteht:

- einer ersten imaginären Grundlinie, die eine Projektion auf einer horizontalen Ebene einer ersten imaginären Linie ist, die das bewegliche Ziel (11) mit dem Luftfahrzeug (10) verbindet; und
- einer zweiten imaginären Grundlinie, die eine Projektion auf der horizontalen Ebene einer zweiten imaginären Linie ist, die das bewegliche Ziel (11) mit mindestens einem Referenzstandort des Luftfahrzeugs (10) verbindet;

○ einer radialen Abweichung, die zwischen Folgendem besteht:

- einem Umfang, der in dem beweglichen Ziel (11) zentriert ist und entlang einer Projektion in der horizontalen Ebene des tatsächlichen Standortes des Luftfahrzeug (10) verläuft; und
- einem Umfang, der in dem beweglichen Ziel (11) zentriert ist und entlang einer Projektion in der horizontalen Ebene des mindestens einen Referenzstandortes des Luftfahrzeug (10) verläuft.

4. Verfahren zum Verfolgen eines beweglichen Ziels (11) von einem Luftfahrzeug (10) nach Anspruch 3, **dadurch gekennzeichnet, dass** die gewünschte Geschwindigkeit, mit der das Luftfahrzeug (10) zu dem mindestens einen Referenzstandort fliegt, gemäß einer Kombination von einem oder mehreren von mindestens proportionalen, integralen und derivativen Kriterien, die mathematisch eine beliebige Kombination von einer oder mehreren von mindestens der Winkelabweichung und der radialen Abweichung kombinieren.

5. Verfahren zum Verfolgen eines beweglichen Ziels (11) von einem Luftfahrzeug (10) nach Anspruch 1, **dadurch gekennzeichnet, dass** die gewünschte Geschwindigkeit, um zum Referenzstandort zu fliegen, basierend auf der Windgeschwindigkeit berechnet wird, die für den tatsächlichen Standort des Luftfahrzeugs (10) lokal ist.

6. Verfahren zum Verfolgen eines beweglichen Ziels (11) von einem Luftfahrzeug (10) nach Anspruch 1, **dadurch gekennzeichnet, dass** gemäß einer vorbestimmten Verhaltensrichtlinie, die Erfassbarkeitszone ein Kreis in einer horizontalen Ebene ist, der in dem beweglichen Ziel (11) zentriert ist.

7. Verfahren zum Verfolgen eines beweglichen Ziels (11) von einem Luftfahrzeug (10) nach Anspruch 1, **dadurch gekennzeichnet, dass** eine vorbestimmte Verhaltensrichtlinie zum Bestimmen der Erfassbarkeitszone auf einer Kombination von einem oder mehreren von mindestens Folgendem basiert:

○ einer Wahrscheinlichkeit, dass das bewegliche Ziel (11) einen Schall erfasst, der vom Luftfahrzeug (10) emittiert wird, wobei diese Wahrscheinlichkeit auf Merkmalen des Luftfahrzeugs (10) basiert, und;
○ einer Wahrscheinlichkeit, dass das bewegliche Ziel (11) das Luftfahrzeug (10) visuell erfasst, wobei diese Wahrscheinlichkeit auf Merkmalen des Luftfahrzeugs (10) basiert.

8. Verfahren zum Verfolgen eines beweglichen Ziels (11) von einem Luftfahrzeug (10) nach Anspruch 1, **dadurch gekennzeichnet, dass** eine vorbestimmte Verhaltensrichtlinie zum Berechnen des Referenzstandortes auf dem Anordnen des Referenzstandortes unter einem ersten Rand (13), der eine Grenze für die Erfassbarkeitszone ist, und einem zweiten Rand (12) basiert, der eine Grenze ist, über welche hinaus das Luftfahrzeug (10) das bewegliche Ziel (11) wahrscheinlich nicht erfasst, wobei diese Wahrscheinlichkeit auf Merkmalen des Luftfahrzeugs (10) basiert.

9. Verfahren zum Verfolgen eines beweglichen Ziels (11) von einem Luftfahrzeug (10) nach Anspruch 8, **dadurch gekennzeichnet, dass** gemäß einer vorbestimmten Verhaltensrichtlinie, der erste Rand (13) und der zweite Rand (12) die Formen von Umfängen in einer horizontalen Ebene aufweisen, wobei die Umfänge in dem beweglich Ziel (11) zentriert sind.

10. Verfahren zum Verfolgen eines beweglichen Ziels (11) von einem Luftfahrzeug (10) nach Anspruch 1, **dadurch gekennzeichnet, dass** gemäß einer vorbestimmten Verhaltensrichtlinie, der Referenzstandort des Luftfahrzeugs (10) auf einer Höhe angeordnet ist, die in Abhängigkeit von Geländeeigenschaften eingestellt wird, so dass bei Auftreten eines Hindernisses, das eine Erfassung des mobilen Ziels (11) aus dem Luftfahrzeug (10) behindert, die Höhe des Referenzstandortes entsprechend angehoben oder gesenkt wird.

11. Verfahren zum Verfolgen eines beweglichen Ziels (11) von einem Luftfahrzeug (10) nach Anspruch 1, **dadurch gekennzeichnet, dass** es das Beurteilen umfasst, ob die geschätzte Geschwindigkeit des beweglichen Ziels (11):

○ höher als die maximale Grundgeschwindigkeit ist, die für das Luftfahrzeug (10) zulässig ist, unter tatsächlichen Windbedingungen;

◦ niedriger als die maximale Grundgeschwindigkeit ist, die für das Luftfahrzeug (10) zulässig ist, unter tatsächlichen Windbedingungen; oder

◦ gleich ist oder zwischen die minimale Grundgeschwindigkeit, die für Luftfahrzeug (10) zulässig ist, und die maximale Grundgeschwindigkeit fällt, die für das Luftfahrzeug (10) zulässig ist, unter tatsächlichen Windbedingungen.

12. Verfahren zum Verfolgen eines beweglichen Ziels (11) von einem Luftfahrzeug (10) nach Anspruch 11, **dadurch gekennzeichnet, dass,** wenn die Geschwindigkeit des beweglichen Ziels (11) niedriger als die minimale Grundgeschwindigkeit des Luftfahrzeugs (10) ist, unter tatsächlichen Windbedingungen, wobei das Verfahren Folgendes umfasst:

◦ Erzeugen von mindestens: einer ersten Führungsreferenz und einer zweiten Führungsreferenz, wobei die erste Führungsreferenz mindestens einen ersten Referenzstandort für das Luftfahrzeug (10) umfasst und die zweite Führungsreferenz mindestens einen zweiten Referenzstandort für das Luftfahrzeug (10) umfasst, wobei der erste Referenzstandort und der zweite Referenzstandort außerhalb der Erfassbarkeitszone angeordnet sind; o Anweisen des Luftfahrzeugs (10), abwechselnd zu dem mindestens einen ersten Referenzstandort und dem mindestens einen zweiten Referenzstandort zu fliegen, gemäß der erzeugten ersten Führungsreferenz und der zweiten Führungsreferenz.

13. Verfahren zum Verfolgen eines beweglichen Ziels (11) von einem Luftfahrzeug (10) nach Anspruch 11, **dadurch gekennzeichnet, dass,** wenn die Geschwindigkeit des beweglichen Ziels (11) höher als die maximale Grundgeschwindigkeit des Luftfahrzeugs (10) ist, unter tatsächlichen Windbedingungen, das Verfahren das Erzeugen mindestens einer Führungsreferenz umfasst, die mindestens einen Referenzstandort für das Luftfahrzeug (10) umfasst, wobei der Referenzstandort außerhalb der Erfassbarkeitszone angeordnet ist und wobei das Verfahren das Anweisen des Luftfahrzeugs (10) umfasst, bei der maximalen Grundgeschwindigkeit, die für das Luftfahrzeug (10) zulässig ist, zum Referenzstandort zu fliegen, unter tatsächlichen Windbedingungen.

14. Verfahren zum Verfolgen eines beweglichen Ziels (11) von einem Luftfahrzeug (10) nach Anspruch 11, **dadurch gekennzeichnet, dass, wenn** die Geschwindigkeit des beweglichen Ziels (11) gleich ist oder zwischen die minimale Grundgeschwindigkeit, die für Luftfahrzeug (10) zulässig ist, und die maximale Grundgeschwindigkeit fällt, die für das Luftfahrzeug (10) zulässig ist, unter tatsächlichen Windbedingungen, das Verfahren das Erzeugen mindestens einer Führungsreferenz umfasst, die mindestens einen Referenzstandort für das Luftfahrzeug (10) umfasst, wobei der Referenzstandort für das Luftfahrzeug außerhalb der Erfassbarkeitszone und unmittelbar hinter dem beweglichen Ziel (11) angeordnet ist.

15. Computerlesbares Medium, **dadurch gekennzeichnet, dass** es Anweisungen zum Ausführen des in Anspruch 1 bis 14 beschriebenen Verfahrens umfasst.

16. System zum Verfolgen eines beweglichen Ziels (11) von einem Luftfahrzeug (10), **dadurch gekennzeichnet, dass** es ein Verfolgungsinfrastrukturmodul (100) umfasst, das wiederum ein Luftfahrzeug-Verhaltensrichtlinienmodul (102) und ein Verfolgungsalgorithmusmodul (104) umfasst, wobei das Verfolgungsalgorithmusmodul (104) konfiguriert ist, das in Anspruch 1 bis 14 beschriebene Verfahren, gemäß Verhaltensrichtlinien auszuführen, die in dem Luftfahrzeug-Verhaltensrichtlinienmodul (102) gespeichert sind.

**Revendications**

1. Procédé pour suivre une cible en mouvement (11) depuis un véhicule aérien (10) comprenant la détermination d'une position et d'une vitesse estimées d'au moins une cible en mouvement (11) et l'ordre à un véhicule aérien (10) de suivre la cible en mouvement (11) **caractérisé en ce qu'**il comprend :

◦ la détermination d'une zone de détectabilité autour de la cible en mouvement (11) ;
◦ le calcul d'au moins une position de référence pour le véhicule aérien 10, relative à la position estimée de la cible en mouvement (11), dans lequel la position de référence est placée hors de la zone de détectabilité ;
◦ la génération d'au moins une référence de guidage pour commander le véhicule aérien (10) pour suivre la cible en mouvement (11), dans lequel la référence de guidage comprend n'importe quelle combinaison de l'une ou plusieurs parmi au moins :

- une trajectoire voulue pour voler vers la position de référence calculée ;
- une vitesse voulue pour voler vers la position de référence calculée ;
- une altitude de vol voulue, et ;

   ◦ l'ordre au véhicule aérien (10) de voler selon la référence de guidage générée ;

dans lequel la détermination de la zone de détectabilité, le calcul d'une position de référence et la génération d'au moins une référence de guidage sont réalisés selon au moins une politique de comportement prédéterminée du véhicule aérien (10).

2. Procédé pour suivre une cible en mouvement (11) depuis un véhicule aérien (10) selon la revendication 1, **caractérisé en ce que** la vitesse voulue est calculée sur la base de la divergence existant entre la position réelle du véhicule aérien (10) et la position de référence du véhicule aérien (10).

3. Procédé pour suivre une cible en mouvement (11) depuis un véhicule aérien (10) selon la revendication 2, **caractérisé en ce que** la divergence existant entre la position réelle du véhicule aérien (10) et la au moins une position de référence du véhicule aérien (10) est calculée sur la base de n'importe quelle combinaison de l'une ou plusieurs parmi au moins :

   ◦ déviation angulaire existant entre :

- une première ligne imaginaire de fond qui est une projection sur un plan horizontal d'une première ligne imaginaire qui relie la cible en mouvement (11) au véhicule aérien (10) ; et
- une deuxième ligne imaginaire de fond qui est une projection sur le plan horizontal d'une deuxième ligne imaginaire qui relie la cible en mouvement (11) à la au moins une position de référence du véhicule aérien (10), et ;

   ◦ déviation radiale existant entre :

- une circonférence centrée dans la cible en mouvement (11) et passant le long d'une projection dans le plan horizontal de la position réelle du véhicule aérien (10) ; et
- une circonférence centrée dans la cible en mouvement (11) et passant le long d'une projection dans le plan horizontal de la au moins une position de référence du véhicule aérien (10).

4. Procédé pour suivre une cible en mouvement (11) depuis un véhicule aérien (10) selon la revendication 3, **caractérisé en ce que** la vitesse voulue à laquelle le véhicule aérien (10) vole vers la au moins une position de référence est calculée selon n'importe quelle combinaison de l'un ou plusieurs critères proportionnels, intégraux et dérivatifs, qui combinent mathématiquement n'importe quelle combinaison d'une ou plusieurs parmi au moins la déviation angulaire et la déviation radiale.

5. Procédé pour suivre une cible en mouvement (11) depuis un véhicule aérien (10) selon la revendication 1, **caractérisé en ce que** la vitesse voulue pour voler vers la position de référence est calculée sur la base de la vitesse du vent locale dans la position réelle du véhicule aérien (10).

6. Procédé pour suivre une cible en mouvement (11) depuis un véhicule aérien (10) selon la revendication 1, **caractérisé en ce que**, selon une politique de comportement prédéterminée, la zone de détectabilité est un cercle dans un plan horizontal, centrée dans la cible en mouvement (11).

7. Procédé pour suivre une cible en mouvement (11) depuis un véhicule aérien (10) selon la revendication 1, **caractérisé en ce qu'**une politique de comportement prédéterminée pour déterminer la zone de détectabilité est basée sur n'importe quelle combinaison de l'une ou plusieurs parmi au moins :

   o probabilité que la cible en mouvement (11) détecte le son émis par le véhicule aérien (10), dans lequel cette probabilité est basée sur des caractéristiques du véhicule aérien (10), et ;
   o probabilité que la cible en mouvement (11) détecte visuellement le véhicule aérien (10), dans lequel cette probabilité est basée sur des caractéristiques du véhicule aérien (10).

8. Procédé pour suivre une cible en mouvement (11) depuis un véhicule aérien (10) selon la revendication 1, **caractérisé**

**en ce qu'**une politique de comportement prédéterminée pour calculer la position de référence est basée sur le placement de la position de référence entre une première limite (13), qui est une limite pour la zone de détectabilité, et une deuxième limite (12), qui est une limite au-dessus de laquelle le véhicule aérien (10) n'est pas susceptible de détecter la cible en mouvement (11), dans lequel cette probabilité est basée sur des caractéristiques du véhicule aérien (10).

9. Procédé pour suivre une cible en mouvement (11) depuis un véhicule aérien (10) selon la revendication 8, **caractérisé en ce que**, selon une politique de comportement prédéterminée, la première limite (13) et la deuxième limite (12) ont les formes de circonférences dans un plan horizontal, les circonférences centrées dans la cible en mouvement (11).

10. Procédé pour suivre une cible en mouvement (11) depuis un véhicule aérien (10) selon la revendication 1, **caractérisé en ce que**, selon une politique de comportement prédéterminée, la position de référence du véhicule aérien (10) est placée à une altitude qui est ajustée en fonction des caractéristiques du terrain, de sorte que si un obstacle entravant la détection de la cible mobile (11) depuis le véhicule aérien (10) survient, l'altitude de la position de référence est donc relevée ou rabaissée.

11. Procédé pour suivre une cible en mouvement (11) depuis un véhicule aérien (10) selon la revendication 1, **caractérisé en ce qu'**il comprend l'évaluation pour savoir si la vitesse estimée de la cible en mouvement (11) :

    o est plus élevée que la vitesse-sol maximale autorisée pour le véhicule aérien (10), à des conditions de vent réelles de vent ;
    o est plus faible que la vitesse-sol minimale autorisée pour le véhicule aérien (10), à des conditions de vent réelles de vent ; ou
    o est égale ou se situe entre la vitesse-sol minimale autorisée pour le véhicule aérien (10) et la vitesse-sol maximale autorisée pour le véhicule aérien (10), à des conditions de vent réelles.

12. Procédé pour suivre une cible en mouvement (11) depuis un véhicule aérien (10) selon la revendication 11, **caractérisé en ce que** la vitesse de la cible en mouvement (11) est plus faible que la vitesse-sol minimale du véhicule aérien (10), à des conditions de vent réelles, le procédé comprend :

    o la génération d'au moins : une première référence de guidage et une deuxième référence de guidage, dans lequel la première référence de guidage comprend au moins une première position de référence pour le véhicule aérien (10) et la deuxième référence de guidage comprend au moins une deuxième position de référence pour le véhicule aérien (10), dans lequel la première position de référence et la deuxième position de référence sont placées hors de la zone de détectabilité, et ;
    o l'ordre au véhicule aérien (10) de voler alternativement vers la au moins une première position de référence et vers la au moins une deuxième position de référence, selon la première référence de guidage générée et la deuxième référence de guidage.

13. Procédé pour suivre une cible en mouvement (11) depuis un véhicule aérien (10) selon la revendication 11, **caractérisé en ce que** la vitesse de la cible en mouvement (11) est plus élevée que la vitesse-sol maximale du véhicule aérien (10), à des conditions de vent réelles, le procédé comprend la génération d'au moins une référence de guidage comprenant au moins une position de référence pour le véhicule aérien (10), dans lequel la position de référence est placée hors de la zone de détectabilité et dans lequel le procédé comprend l'ordre au véhicule aérien (10) de voler vers la position de référence à la vitesse-sol maximale autorisée pour le véhicule aérien (10), à des conditions de vent réelles.

14. Procédé pour suivre une cible en mouvement (11) depuis un véhicule aérien (10) selon la revendication 11, **caractérisé en ce que** si la vitesse de la cible en mouvement (11) est égale ou se situe entre la vitesse-sol minimale autorisée pour le véhicule aérien (10) et la vitesse-sol maximale autorisée pour le véhicule aérien (10), à des conditions de vent réelles, le procédé comprend la génération d'au moins une référence de guidage comprenant au moins une position de référence pour le véhicule aérien (10), dans lequel la position de référence pour le véhicule aérien est placé hors de la zone de détectabilité et juste derrière la cible en mouvement (11).

15. Support lisible par ordinateur **caractérisé en ce qu'**il comprend les ordres pour mettre en oeuvre le procédé décrit dans les revendications 1 à 14.

16. Système pour suivre une cible en mouvement (11) depuis un véhicule aérien (10) **caractérisé en ce qu'**il comprend un Module d'Infrastructure de Suivi (100) qui comprend à son tour un Module de Politiques de Comportement du Véhicule Aérien (102) et un Module d'Algorithme de Suivi (104), dans lequel le Module d'Algorithme de Suivi (104) est configuré pour réaliser le procédé décrit dans les revendications 1 à 14, selon les politiques de comportement stockées dans le Module de Politiques de Comportement du Véhicule Aérien (102).

FIG. 1

FIG. 2

```
┌─────────────────────────────┐
│    STATE THE PROBLEM        │──── 1
│  IN PLANAR COORDINATES      │
└─────────────────────────────┘
              │
              ▼
┌─────────────────────────────┐
│    DEFINE THE DESIRED       │──── 2
│  LOCATION OF AIR VEHICLE    │
└─────────────────────────────┘
              │
              ▼
┌─────────────────────────────┐
│      ESTIMATE ERRORS        │──── 3
└─────────────────────────────┘
              │
              ▼
┌─────────────────────────────┐
│   CALCULATED DESIRED        │──── 4
│  COURSE RELATIVE TO THE     │
│      MOVING TARGET          │
└─────────────────────────────┘
              │
              ▼
┌─────────────────────────────┐
│   CALCULATED INTENDED       │──── 5
│ GROUNDSPEED OF THE AIR VEHICLE │
│     RELATIVE TO THE         │
│      MOVING TARGET          │
└─────────────────────────────┘
              │
              ▼
┌─────────────────────────────┐
│  CALCULATE THE ABSOLUTE     │──── 6
│ GROUNDSPEED OF THE AIR VEHICLE │
└─────────────────────────────┘
              │
              ▼
┌─────────────────────────────┐
│   ESTIMATE RESULTING        │──── 7
│  AIR VEHICLE AIRSPEED       │◄───────────────┐
└─────────────────────────────┘                │
              │                                 │
              ▼                                 │
┌─────────────────────────────┐                │
│  CHECK FOR AIRCRAFT         │──── 8a         │
│ PERFORMANCE LIMITATIONS     │                │
└─────────────────────────────┘                │
              │                                 │
              ▼              ┌──────────────────────────┐
         ╱─────────╲         │ RECALCULATE COURSE       │── 8b
        ╱  IS DESIRED ╲      │ GROUNDSPEED VECTOR       │
       ╱  AIRSPEED WITHIN╲   └──────────────────────────┘
       ╲  PERFORMANCE   ╱ NO          │
        ╲ LIMITATIONS? ╱──────►       ▼
         ╲───────────╱       ┌──────────────────────────┐
              │ YES          │  RECALCULATE COURSE      │── 8c
              ▼              └──────────────────────────┘
┌─────────────────────────────┐
│    FEED FLIGHT              │
│  CONTROL SYSTEM             │──── 9
└─────────────────────────────┘
```

# FIG. 3

FIG. 4

FIG. 5

FIG. 6

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2071353 A2